# EUROPEAN PATENT APPLICATION

(11) **EP 4 628 639 A1**
(43) Date of publication of application: **08.10.2025**
(21) Application number: 23914906.5
(22) Date of filing: 05.10.2023
(51) Int. Cl.: D04H 1/728, D01D 5/00, B01D 39/02

(54) **APPARATUS AND METHOD FOR MANUFACTURING FILTER**

(30) Priority: 04.01.2023 KR 20230001247
(71) Applicant: LG Electronics Inc., Yeongdeungpo-gu Seoul 07336 (KR)
(72) Inventor: BAECK, Seung Jae, Seoul 08592 (KR); HYUN, Ok Chun, Seoul 08592 (KR); LEE, Giseop, Seoul 08592 (KR)
(74) Representative: Vossius & Partner Patentanwälte Rechtsanwälte mbB
(86) International application number: PCT/KR2023/015281
(87) International publication number: WO 2024/147442

(57) **Abstract**

The present disclosure relates to an apparatus and a method for manufacturing a filter. The apparatus for manufacturing a filter, according to the present disclosure, may comprise: a support conveying device which conveys, in one direction, a support on which nanofibers are deposited; a spinning device which is spaced apart from the support and ejects a solution onto the support; and a lift device which is connected to the spinning device and varies the spacing between the spinning device and the support conveying device.

## Description

### Technical Field

The present disclosure relates to an apparatus and a method for manufacturing a filter and, more specifically, to an apparatus and a method for manufacturing a filter in which nanofibers having various diameters are formed.

### Background Art

A nanofiber is a fiber with a diameter of several nm to less than 1000 nm. Nanofibers may be used as materials for products such as biofilters, sensors, fuel cell electrode materials, precision filters, electronic paper, and heat pipe wicks, and their applications are being actively developed in various fields such as engineering and medicine.

One method for manufacturing nanofibers is electrospinning. Electrospinning is performed by using an electrospinning device having a nozzle, a collector, and a power source. In the electrospinning device, a voltage is applied between the nozzle and the collector by the power source to charge the nozzle and the collector.

When a raw material solution is ejected from the nozzle while a voltage is applied, a cone-shaped protrusion which is called a Taylor cone and is made of a solution is formed at the tip opening of the nozzle. By gradually increasing the applied voltage, when Coulomb force exceeds the surface tension of the solution, the solution is ejected from the tip of the Taylor cone, forming a spinning jet. The spinning jet moves to the collector by the Coulomb force and is collected as nanofibers on the collector.

In the case of filters made by using conventional nanofibers, there was a problem of high pressure loss. The pressure loss refers to a difference in pressure that occurs before and after a filter as air passes through the filter. High pressure loss may lead to problems such as reduced air filtration performance or power efficiency. One method to reduce pressure loss was to stack nanofiber layers with different diameters.

The "HIGH-PERFORMANCE MULTILAYER STRUCTURED FILTER MEDIUM FOR AIR PURIFICATION FILTER" disclosed in Korean Patent No. 2157444 includes: a support; a first nanofiber web stacked on one surface of the upper portion of the support; a second nanofiber web stacked on one surface of the upper portion of the first nanofiber web; and a third nanofiber web stacked on one surface of the upper portion of the second nanofiber web.

The conventional multilayer structured filter medium is composed of four layers including the support, the first nanofiber web, the second nanofiber web, and the third nanofiber web, and thus it has the drawback that separation between the layers may occur during post-processing.

The "NANOFIBER MANUFACTURING SYSTEM AND NANOFIBER MANUFACTURING METHOD" disclosed in Japan Patent No. 5021109 includes: a sheet transfer device that transports a substrate sheet; a nozzle that electrospins nanofibers onto the substrate sheet conveyed by the transfer device; and a plurality of nanofiber manufacturing devices arranged in a direction in which the substrate sheet is conveyed, each having a nanofiber formation space in which the nozzle is positioned.

The conventional nanofiber manufacturing system has the drawback that it is difficult to control the formation conditions of different nanofiber layers in each of the plurality of nanofiber formation spaces, and that it is not easy to construct a manufacturing system for stacking the plurality of nanofiber layers without interference among the plurality of nozzles.

In addition, the stacked nanofiber layers are not sufficiently entangled with each other, which causes separation between the layers.

### Disclosure

### Technical Problem

An objective of the present disclosure may be to provide an apparatus and a method for manufacturing a filter in which the filtration performance of a filter is improved.

Another objective of the present disclosure may be to provide an apparatus and a method for manufacturing a filter in which the durability of a filter is improved.

Another objective of the present disclosure may be to provide an apparatus and a method for manufacturing a filter in which the nanofiber layer of a filter is formed as a single layer composed of nanofibers having different diameters.

Another objective of the present disclosure may be to provide an apparatus and a method for manufacturing a filter with improved production efficiency.

Another objective of the present disclosure may be to provide an apparatus and a method for manufacturing a filter with a simplified production process.

Another objective of the present disclosure may be to provide an apparatus and a method for manufacturing a filter in which the uniformity of nanofibers included in the filter is improved.

Objectives of the present disclosure are not limited to the objectives mentioned above, and other objectives not mentioned will be clearly understood by those skilled in the art from the following description.

### Technical Solution

In order to accomplish the above objectives, according to the present disclosure, a spinning device with a nozzle for spinning nanofibers may be moved to change a position thereof.

According to the present disclosure, the spinning device may move on a plane parallel to a surface of a support on which the nanofibers are deposited.

According to the present disclosure, the spinning device may move so that a distance between the spinning device and the surface of the support on which the nanofibers are deposited varies.

In order to achieve the above-described objectives, according to an aspect of the present disclosure, a filter manufacturing apparatus includes: a support conveying device configured to convey a support, on which nanofibers are deposited, in one direction; a spinning device spaced apart from the support and configured to eject a solution onto the support; and a lift device connected to the spinning device and configured to change a distance between the spinning device and the support conveying device, so that the distance between the spinning device and the support may be changed.

The spinning device may be located above the support, and the lift device may raise or lower the spinning device, so that the spinning height of the spinning device may be adjusted.

The spinning device may include: a plurality of nozzles spaced apart upward from the support and arranged in a direction orthogonal to a conveying direction of the support so as to eject a polymer solution onto the support; and a spinning frame that extends in the direction in which the plurality of nozzles are arranged, with the spinning frame connecting the plurality of nozzles to each other, so that nanofibers may be uniformly spun in the width direction of the support.

The lift device may include: a first-side lift device connected to a first side of each of the spinning frames in a direction in which the spinning frame extends, and a second-side lift device connected to a second side of the spinning frame in the direction in which the spinning frame extends, so that the spinning heights of the plurality of nozzles may be adjusted integrally.

The first lift device and the second lift device operate independently of each other, spinning heights of the spinning device at the first side and the second side thereof may be adjusted differently.

The spinning device may include a plurality of spinning devices arranged in the conveying direction of the support, wherein the plurality of spinning devices may be raised or lowered independently of each other, so that the plurality of spinning devices may spin the polymer solution at different heights along the conveying direction of the support.

The filter manufacturing apparatus may further include: a swing device connected to the spinning device and configured to reciprocate the spinning device in a horizontal direction, so that the spinning device may move vertically and at the same time, move horizontally.

The lift device may be disposed between the spinning device and the swing device.

The filter manufacturing apparatus may further include: a power unit configured to charge the spinning device.

In order to achieve the above-described objectives, according to an aspect of the present disclosure, a filter manufacturing method includes: conveying a support on which nanofibers are deposited; spinning a solution from a nozzle onto the support; and moving the nozzle so that a position of the nozzle is changed, so that in the spinning process, the nozzle may move.

In the moving of the nozzle, a time during which the nozzle spins the solution at a first position may be shorter than a time during which the nozzle spins the solution at a second position located above the first position, so that the amount of spun nanofibers with smaller diameters may become greater than the amount of spun nanofibers with larger diameters.

In the moving of the nozzle, the nozzle may move in a vertical direction within a predetermined height range.

In the moving of the nozzle, the nozzle may reciprocate in a horizontal direction.

In the moving of the nozzle, the nozzle may move in the vertical direction while reciprocating in the horizontal direction.

In the moving of the nozzle, a speed at which the nozzle moves in the horizontal direction may be faster than a speed at which the nozzle moves in the vertical direction, so that the polymer solution may be uniformly spun in the horizontal direction at various spinning heights.

In the moving of the nozzle, the vertical movement and the horizontal movement of the nozzle may be performed separately, wherein the nozzle may move vertically to be positioned at a plurality of height points, and at each of the plurality of height points, the nozzle may reciprocate in the horizontal direction.

### Advantageous Effects

According to at least one of the embodiments of the present disclosure, the lift device may adjust the spinning height of the spinning device, so that the polymer solution is spun from various heights, allowing nanofibers of various diameters to be deposited in a single layer during the spinning process. As the nanofibers of various diameters are deposited, the filtration performance of a filter manufactured by the apparatus and method for manufacturing a filter may be improved.

According to at least one of the embodiments of the present disclosure, as nanofibers of various diameters form a single layer, interlayer separation during the processing may be reduced, thereby improving the durability of a filter manufactured by the apparatus and method for manufacturing a filter.

According to at least one of the embodiments of the present disclosure, it may be easy to control spinning conditions for forming a single layer of nanofibers, thereby simplifying the apparatus and method for manufacturing a filter.

According to at least one of the embodiments of the present disclosure, by forming a single layer of nanofibers, a production process may be simplified, thereby improving the production efficiency of the apparatus and method for manufacturing a filter.

According to at least one of the embodiments of the present disclosure, as the spinning device is moved vertically by the lift device and horizontally by the swing device during spinning, a single layer of nanofibers with various diameters may be uniformly formed in a horizontal direction in a filter manufactured by the apparatus and method for manufacturing a filter.

### Description of Drawings

FIG. 1 is a schematic diagram of a filter manufacturing apparatus according to an embodiment of the present disclosure.
FIG. 2 is a view approximately illustrating a process of forming nanofibers.
FIG. 3 is a view approximately illustrating a filter manufacturing apparatus according to an embodiment of the present disclosure.
FIG. 4 is a view approximately illustrating a filter manufacturing apparatus according to an embodiment of the present disclosure.
FIG. 5 is a view approximately illustrating a filter manufacturing apparatus according to an embodiment of the present disclosure.
FIG. 6 is a view approximately illustrating a filter manufacturing apparatus according to another embodiment of the present disclosure.
FIG. 7 is a microscopic image of a nanofiber layer obtained by an apparatus and a method for manufacturing a filter according to an embodiment of the present disclosure.
FIG. 8 is a flowchart of a filter manufacturing method according to an embodiment of the present disclosure.

### Best Mode

Hereinafter, embodiments of the present disclosure are described in detail with reference to exemplary drawings. When adding reference numerals to components in each drawing, it should be noted that identical components are given the same reference numerals as much as possible even if they are shown in different drawings. In addition, when describing the embodiments of the present disclosure, if a detailed description of the relevant known configuration or function is judged to hinder understanding of the embodiments of the present disclosure, detailed descriptions thereof will be omitted.

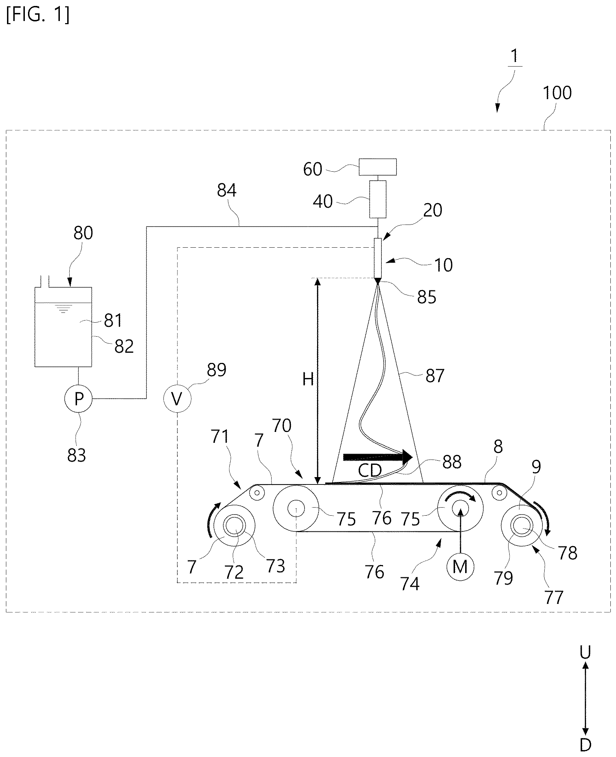

Referring to FIG. 1, a filter manufacturing apparatus 1 will be described.

The filter manufacturing apparatus 1 may include a spinning device 10 that ejects a polymer solution 81 onto the support 7. The spinning device 10 may spin nanofibers 88. The polymer solution 81 ejected from the spinning device 10 may be fiberized (nanofiberized) as a solvent evaporates in the air. The formed nanofibers 88 may be deposited on the support 7. The nanofibers 88 deposited on the support 7 may form a nanofiber layer 8.

The spinning device 10 may be positioned above the support 7. The spinning device 10 may be disposed to be spaced apart upward from the support 7. The spinning device 10 and the support 7 may be spaced apart from each other by a predetermined height (H). For example, the tip of a nozzle 20 of the spinning device 10 and the surface of the support 7 may be spaced apart from each other by a predetermined height (H). The support 7 may be located below the spinning device 10. The polymer solution 81 ejected from the spinning device 10 may descend by a predetermined height (H) while the solvent is vaporized and may be fiberized at the same time. Nanofibers 88 formed as the polymer solution 81 descends through the air may be stacked on the surface of the support 7.

The spinning device 10 may be disposed above a support conveying device 74 that conveys the support 7. The spinning device 10 may be spaced apart upward from the support conveying device 74. The spinning device may be disposed above a collector 76.

The filter manufacturing apparatus 1 may include a spinning chamber 100. The spinning chamber 100 may be a space where nanofibers 88 are formed. The spinning chamber 100 may be maintained under predetermined conditions for the formation of the nanofibers 88. The predetermined conditions may include a predetermined temperature range, a predetermined humidity range, a predetermined pressure range, etc. To maintain the spinning chamber 100 under the predetermined conditions, the spinning chamber 100 may be formed as a sealed space.

The support conveying device 74 may be disposed within the spinning chamber 100. The spinning device 10 may be spaced apart upward from the support conveying device 74 and disposed within the spinning chamber 100. Nanofibers 88 ejected from the spinning device 10 may be deposited on the support 7 conveyed inside the spinning chamber 100.

The spinning device 10 may include the nozzle 20 through which the polymer solution 81 is ejected. The polymer solution 81 may be ejected from the tip of the nozzle 20. The tip of the nozzle 20 may be arranged to be directed downward, and the polymer solution 81 may be sprayed onto the support 7 located below. A Taylor cone 85, which is a cone-shaped protrusion made of the polymer solution 81, may be formed at the tip of the nozzle 20.

The spinning device 10 may include a solution supply part 80 that supplies the polymer solution 81 to the nozzle 20. The solution supply part 80 may include a solution tank 82 in which the polymer solution 81 is stored. The solution tank 82 may maintain the polymer solution 81 under a predetermined condition. The predetermined condition may be a predetermined temperature range. The solution supply part 80 may be disposed in the spinning chamber 100.

The spinning device 10 may include a pipe 84 connecting the solution supply part 80 with the nozzle 20. The pipe 84 may be formed of a flexible material. The polymer solution 81 stored in the solution tank 82 may be moved to the nozzle 20 through the pipe 84 and ejected onto the support 7 from the nozzle 20.

The spinning device 10 may include a pump 83 that supplies power to move the polymer solution 81 stored in the solution tank 82 to the nozzle 20. The pump 83 may move the polymer solution 81 through the pipe 84.

The filter manufacturing apparatus 1 may include a power unit 89 that charges the spinning device 10. The power unit 89 may be electrically connected to the spinning device 10 and may charge the tip of the nozzle 20. The power unit 89 may charge the tip of the nozzle 20. The power unit 89 may also charge the polymer solution 81 gathered at the tip of the nozzle 20. When a voltage applied to the polymer solution 81 exceeds a critical voltage (Vc), spinning may be initiated. The critical voltage (Vc) may be a voltage at which an electric force including electrostatic repulsion and Coulomb force between charges on the surface of the Taylor cone 85 exceeds the surface tension of the polymer solution 81.

The power unit 89 may vary a voltage applied to the spinning device 10 within a predetermined range. When the voltage applied to the spinning device 10 increases, a spinning jet may become thinner, allowing for the formation of a nanofiber 88 with a smaller diameter. However, the diameter of the nanofiber 88 according to a voltage may vary depending on the properties or conductivity of the polymer. Therefore, depending on the type of polymer, an increase in the voltage applied to the spinning device 10 may result in a thicker spinning jet, leading to the formation of a nanofiber 88 with a larger diameter.

Accordingly, the filter manufacturing apparatus may vary the diameter of a nanofiber by changing a voltage applied to the spinning device.

In addition, while changing a voltage applied to the spinning device within a predetermined range during the spinning process, the polymer solution may be spun, thereby obtaining a single layer of nanofibers with various diameters.

In addition, as a single layer of nanofibers with various diameters is obtained, interlayer separation may be reduced.

In addition, the pressure loss of a nanofiber filter may be reduced.

The power unit 89 may be electrically connected to the support conveying device 74. The power unit 89 may charge the support conveying device 74. The support conveying device 74 may include the collector 76. The power unit 89 may apply a voltage to the spinning device 10 and the collector 76 to charge them. For example, the power unit 89 may charge the spinning device 10 negatively (-) and the collector 76 positively (+). As the spinning device 10 is charged, the discharged polymer solution 81 may accumulate on the charged collector 76. Accordingly, the nanofibers 88 may be deposited onto the support 7, which is conveyed along the collector 76.

The filter manufacturing apparatus 1 may include an accumulation device 70 where nanofibers 88 accumulate. The accumulation device 70 may be disposed below the spinning device 10. The accumulation device 70 may be electrically connected to the power unit 89. The accumulation device 70 may be charged. The nanofibers 88 spun from the spinning device 10 may be deposited on the upper surface of the accumulation device 70. The support 7, on which the nanofibers 88 are deposited, may be placed on the accumulation device 70. The accumulation device 70 may convey the support 7.

The nanofibers 88 spun from the spinning device 10 may be deposited on the support 7. The support 7 may serve as a base on which the nanofibers 88 are deposited. The support 7 can support the nanofiber layer 8.

The support 7 may be formed of one fiber material selected from a group consisting of nonwoven fabric, woven fabric, and knitted fabric. For example, the support 7 may be a nonwoven fabric.

The support 7 may include a surface and a back surface. For example, the support 7 may include the surface, which is an upper surface on which nanofibers are deposited, and a back surface, which is a surface opposite to the surface. The back surface of the support 7 may face the collector 76. The nanofibers 88 may be deposited on the surface of the support 7, and the nanofiber layer 8 may be formed on the upper side of the support 7.

The support 7 may be placed on the accumulation device 70 and conveyed in one direction. During this process, the nanofibers 88 may be deposited on the surface of the support 7.

The support 7 may extend in the conveying direction thereof. For example, the length of the support 7 may extend in the conveying direction (CD). The conveying direction of the support 7 may be a direction from a support supply device 71 toward a fabric retrieval device 77.

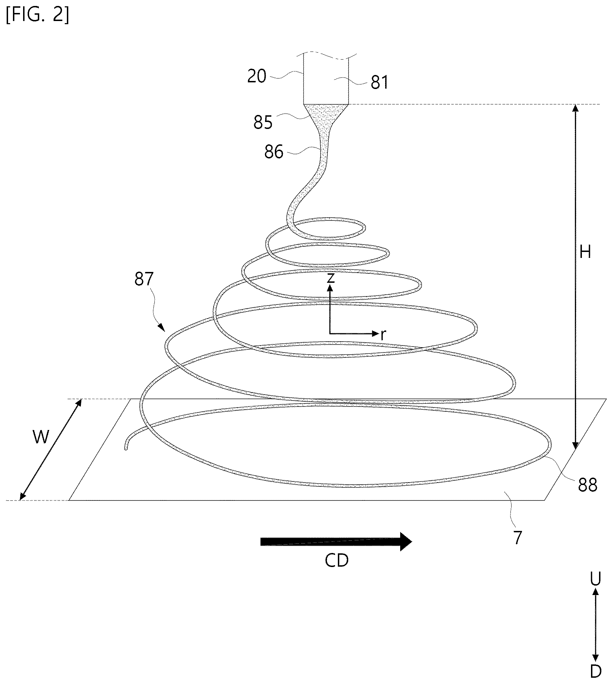

The support 7 may extend in a direction perpendicular to the conveying direction. For example, the width (W) (see FIG. 2) of the support 7 may extend in a direction perpendicular to the conveying direction (CD). The width (W) of the support 7 may extend in a lateral direction.

The accumulation device 70 may include the support supply device 71. The support supply device 71 may supply the support 7 on which the nanofibers 88 are deposited. The support supply device 71 may supply the support 7 in one direction.

The support supply device 71 may include a roller-shaped supply shaft 72. The support 7 may be wound onto a support roll 73 and mounted on the supply shaft 72. The support 7, mounted on the supply shaft 72 via the support roll 73, may be supplied in one direction.

The filter manufacturing apparatus 1 may include the fabric retrieval device 77 for retrieving a nanofiber fabric 9. The nanofiber fabric 9 may include the support 7 and a nanofiber layer 8 stacked on the surface of the support 7.

The fabric retrieval device 77 may include a roller-shaped retrieval shaft 78. The nanofiber fabric 9 may be wound around a fabric roll 79 according to the rotation of the retrieval shaft 78.

The fabric retrieval device 77 may be spaced apart to one side from the support supply device 71. The support supply device 71 may be located at the most upstream side in the conveying direction of the support 7, and the fabric retrieval device 77 may be located at the most downstream side in the conveying direction of the support 7. The support supply device 71 may be disposed at a starting point of the conveyance of the support 7, and the fabric retrieval device 77 may be disposed at an end point of the conveyance of the support 7.

The filter manufacturing apparatus 1 may include the support conveying device 74 that conveys the support 7, on which the nanofibers 88 are deposited, in one direction. The support conveying device 74 may convey the support 7, supplied from the support supply device 71, in one direction. The support conveying device 74 may convey the supplied support 7 to the fabric retrieval device 77. For example, the support conveying device 74 may convey the support 7 from the support supply device 71 to the fabric retrieval device 77.

The support conveying device 74 may be disposed below the spinning device 10. The nanofibers 88 spun from the spinning device 10 may be deposited onto the support 7 conveyed by the support conveying device 74.

The accumulation device 70 may include the support conveying device 74.

The support conveying device 74 may be disposed between the support supply device 71 and the fabric retrieval device 77.

The support conveying device 74 may include the collector 76 on which the support 7 is placed and conveyed. The collector 76 may collect nanofibers 88 spun from the spinning device 10. The collector 76 may have the shape of a belt formed of metal. The metallic collector 76 may be charged by a voltage applied by the power unit 89.

The support conveying device 74 may include a plurality of rollers 75 that circulate the collector 76. The plurality of rollers 75 may be spaced apart from each other. For example, a pair of rollers 75 may be spaced apart from each other in the conveying direction (CD) of the support 7. The collector 76 may be placed horizontally across the plurality of rollers 75. The collector 76 may be circulated by the rotation of the plurality of rollers 75. The direction in which the collector 76 is circulated and rotated may be the same as the rotation direction of the plurality of rollers 75. For example, when a pair of rollers 75 rotates clockwise, the collector 76 may be circulated and rotated clockwise, and the support 7 placed on the collector 76 may be conveyed by the collector 76.

The filter manufacturing apparatus 1 may include a lift device 40 connected to the spinning device 10. The lift device 40 may be disposed above the spinning device 10.

The lift device 40 may vary a distance between the spinning device 10 and the support conveying device 74. The lift device 40 may change a distance (H) between the tip of the nozzle 20 of the spinning device 10 and the surface of the support 7 disposed on the collector 76. For example, the lift device 40 may raise or lower the spinning device 10.

Accordingly, a height at which the polymer solution is ejected from the spinning device during the spinning process may be changed, allowing a single layer of nanofibers with various diameters to be obtained.

In addition, as a single layer of nanofibers is obtained, interlayer destackion in a nanofiber fabric may be reduced, thereby improving durability.

In addition, a single layer of nanofibers including nanofibers having various diameters may be obtained, thereby reducing the pressure loss of a nanofiber filter.

The filter manufacturing apparatus 1 may include a swing device 60 connected to the spinning device 10. The swing device 60 may be disposed above the spinning device 10.

The swing device 60 may reciprocate the spinning device 10 in the horizontal direction. The horizontal direction may be a direction parallel to the surface of the support 7. That is, the spinning device 10, which reciprocates horizontally by the swing device 60, may be spaced apart from the surface of the support 7 and may move on a virtual plane parallel to the surface of the support 7. For example, the swing device 60 may move the spinning device 10, which is spaced apart from the support 7, on the virtual plane. In this case, a distance between the moving spinning device 10 and the support 7 may be maintained constant. The direction in which the spinning device 10 moves may be the horizontal direction.

The horizontal direction in which the swing device 60 moves the spinning device 10 may include a plurality of axial directions parallel to the surface of the support 7. The horizontal direction may include the width (W) direction and the longitudinal direction of the support 7. The longitudinal direction of the support 7 may be a direction parallel to the conveying direction (CD) of the support 7. That is, the swing device 60 may move the spinning device 10 along a plurality of axes that are parallel to the surface of the support 7.

Accordingly, the spinning device 10 may uniformly spin the nanofibers 88 onto the support 7.

The lift device 40 may be disposed between the spinning device 10 and the swing device 60. The swing device 60 may be connected to the upper side of the lift device 40. When the swing device 60 operates, the lift device 40 and the nozzle 20 may reciprocate integrally in the horizontal direction. When the lift device 40 operates, the swing device 60 may not move in a vertical direction, but the nozzle 20 may move in the vertical direction.

In the present embodiment, the swing device 60 may be connected to the upper side of the lift device 40, but is not limited thereto, and the lift device 40 may be connected to the upper side of the swing device 60. In this case, when the lift device 40 operates, the swing device 60 and the nozzle 20 may move integrally in the vertical direction. In this case, when the swing device 60 operates, the lift device 40 may not move in the horizontal direction, and the nozzle 20 may move in the horizontal direction.

Referring to FIG. 2, the filter manufacturing apparatus 1 will be described.

When a voltage applied to the spinning device 10 increases and exceeds the critical voltage (Vc), the Taylor cone 85 may be formed at the tip of the nozzle 20, and a jet 86 or 87 may be emitted from the Taylor cone 85. The jet 87, which is elongated and spun from the Taylor cone 85, may descend while exhibiting whipping behavior. In this case, the whipping jet 87 may be elongated as it approaches the accumulation device 70, during which the thickness of the whipping jet 87 may gradually become thinner. A straight jet 86 may be formed between the Taylor cone 85 and the whipping jet 87.

During the descent of the whipping jet 87 through the air, a solvent contained in the polymer solution 81 may evaporate. As the solvent evaporates, the thickness of the whipping jet 87 may decrease. The whipping jet 87 in which the solvent is evaporated may be fiberized. As the whipping jet 87 descends and the solvent evaporates, nanofibers 88 may be formed. The formed nanofibers 88 may be deposited on the support 7.

In order for the whipping jet 87 to be nanofiberized while moving onto the support 7, the spinning device 10 and the accumulation device 70 may be spaced apart from each other by a predetermined distance. For example, the tip of the nozzle 20 of the spinning device 10 and the surface of the support 7 placed on the accumulation device 70 may be spaced apart from each other by a predetermined height (H). The whipping jet 87 may nanofiberized while descending by a predetermined height (H). The formed nanofibers 88 may be deposited onto the support 7.

When the distance between the tip of the nozzle 20 and the surface of the support 7 increases, the stretching time of the whipping jet 87 in the air may increase. As the distance between the tip of the nozzle 20 and the surface of the support 7 increases, the diameter of the formed nanofibers 88 may decrease. Conversely, when the distance between the tip of the nozzle 20 and the surface of the support 7 decreases, the stretching time of the whipping jet 87 may decrease, and the diameter of the formed nanofibers 88 may increase.

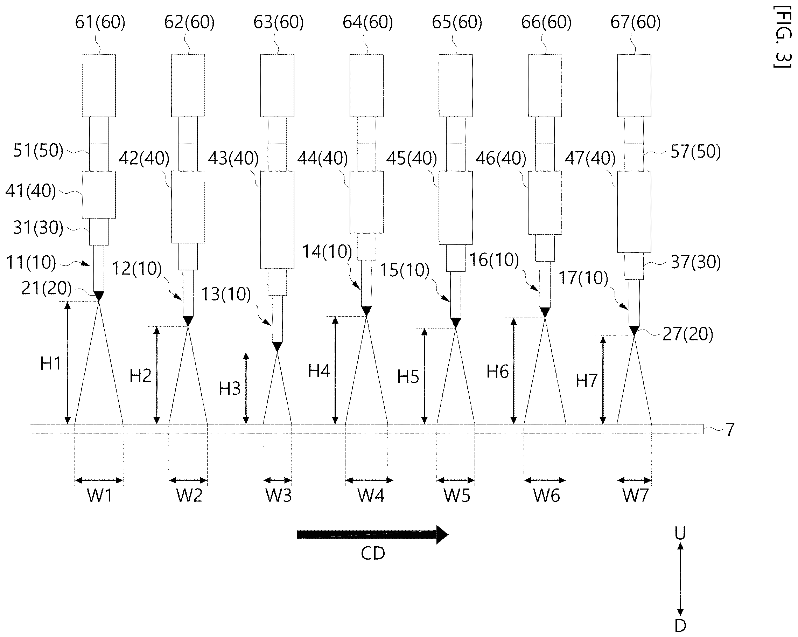

Referring to FIG. 3, the filter manufacturing apparatus 1 will be described.

The spinning device 10 may include a plurality of spinning devices 10 arranged in the direction in which the support 7 is conveyed. For example, the spinning device 10 may include a first spinning device 11 to a seventh spinning device 17 arranged in the direction (CD) in which the support 7 is conveyed. Each of the plurality of spinning devices 10 may include the nozzle 20. For example, the seven spinning devices 10 may respectively include nozzles 20. Each nozzle 20 of the plurality of spinning devices 10 may discharge the polymer solution 81 onto the support 7.

The plurality of spinning devices 10 may be raised or lowered independently of each other. Heights between the plurality of spinning devices 10 and the support 7 may be different from each other. For example, heights (H) at which the seven spinning devices 10 are spaced apart upward from the support 7 may be a first height (H1) to a seventh height (H7), respectively, which are different from each otehr. In this case, the thicknesses of the nanofibers 88 spun from the plurality of spinning devices 10 may differ from each other. For example, the thicknesses of the nanofibers 88 spun at the seven different spacing heights H1, H2, H3, H4, H5, H6, H7, respectively, may be classified into seven groups.

Accordingly, since the polymer solution 81 is spun at various heights while the support 7 is conveyed, there is no concern about process delay until the heights of the spinning devices 10: 11, 12, 13, 14, 15, 16, 17 are adjusted, enabling smooth execution of the process.

In addition, production efficiency may be improved due to the smooth execution of the process.

In addition, each of the spinning devices 10: 11, 12, 13, 14, 15, 16, 17 may be connected to a corresponding lift device 40: 41, 42, 43, 44, 45, 46, 47, enabling various process designs and thereby improving the flexibility of the process.

The area of fibers deposited by the spinning device 10 may vary depending on a height by which the spinning device 10 is spaced apart upward from the support 7. As the spacing height between the spinning device 10 and the support 7 increases, the depositioin area may increase. Conversely, as the spacing height between the spinning device 10 and the support 7 decreases, the deposition area may decrease. For example, the seven spinning devices 10: 11, 12, 13, 14, 15, 16, 17, each spinning at a different height, may spin nanofibers 88 over different respective spinning areas, from a first spinning area to a seventh spinning area W1, W2, W3, W4, W5, W6, W7.

The filter manufacturing apparatus 1 may include the plurality of lift devices 40: 41, 42, 43, 44, 45, 46, 47 connected to the plurality of spinning devices 10. That is, the lift devices 40: 41, 42, 43, 44, 45, 46, 47 may be the plurality of lift devices 40: 41, 42, 43, 44, 45, 46, 47 connected respectively to the plurality of spinning devices 10: 11, 12, 13, 14, 15, 16, 17. For example, the filter manufacturing apparatus 1 may include seven lift devices 40: 41, 42, 43, 44, 45, 46, 47 connected respectively to the upper sides of the seven spinning devices 10: 11, 12, 13, 14, 15, 16, 17.

The plurality of lift devices 40: 41, 42, 43, 44, 45, 46, and 47 may respectively raise or lower the plurality of spinning devices 10: 11, 12, 13, 14, 15, 16, 17 connected respectively thereto. For example, a first lift device 41 may raise or lower the first spinning device 11, and a second lift device 42 may raise or lower a second spinning device 12. Similarly, a third lift device 43 to a seventh lift device 47 may respectively raise or lower the third spinning device 13 to the seventh spinning device 17, respectively. In this case, the plurality of lift devices 40: 41, 42, 43, 44, 45, 46, 47 may be operated independently of one another. Since the plurality of lift devices 40: 41, 42, 43, 44, 45, 46, 47 are operated independently of one another, the plurality of spinning devices 10: 11, 12, 13, 14, 15, 16, 17 to which the plurality of lift devices 40: 41, 42, 43, 44, 45, 46, 47 are respectively connected may also be raised or lowered independently of one another.

The filter manufacturing apparatus 1 may include a plurality of swing devices 60, including swing devices 61, 62, 63, 64, 65, 66, and 67, which are respectively connected to the plurality of spinning devices 10. That is, the swing devices 60, including swing devices 61, 62, 63, 64, 65, 66, and 67, may be the plurality of swing devices 60, which are respectively connected to the plurality of spinning devices 10. For example, the filter manufacturing apparatus 1 may include the seven swing devices 60 including swing devices 61, 62, 63, 64, 65, 66, and 67 which are respectively connected to the upper sides of the seven spinning devices 10.

The plurality of swing devices 60: 61, 62, 63, 64, 65, 66, 67 may move the spinning devices 10 connected respectively thereto. For example, a first swing device 61 may reciprocate the first spinning device 11 in a horizontal direction, and a second swing device 62 may reciprocate the second spinning device 10 in the horizontal direction. This may similarly be applied to a third swing device 63 through a seventh swing device 67.

The plurality of swing devices 60: 61, 62, 63, 64, 65, 66, 67 may be operated independently of one another. Since the plurality of swing devices 60: 61, 62, 63, 64, 65, 66, 67 are operated independently of one another, the plurality of spinning devices 10 to which the plurality of swing devices 60: 61, 62, 63, 64, 65, 66, 67 are respectively connected may also be moved independently of one another in a horizontal direction.

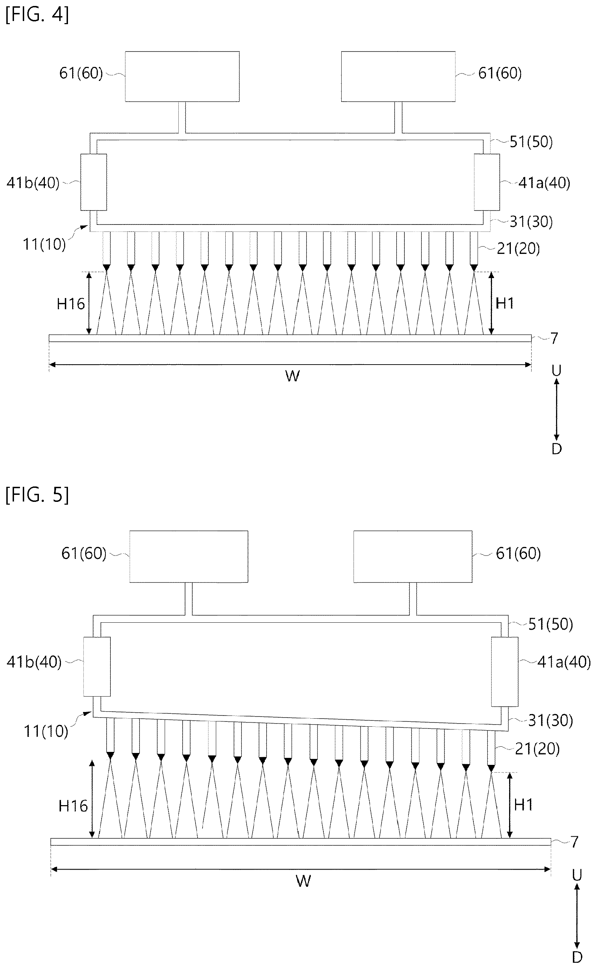

Referring to FIG. 4, the filter manufacturing apparatus 1 will be described. The filter manufacturing apparatus 1 shown in FIG. 4 may be described by using the first spinning device 11 shown in FIG. 3 as an example. Accordingly, the filter manufacturing apparatus is not limited thereto, but may be similarly applied to the second spinning device 12 to the seventh spinning device 17.

The spinning devices 10 may include a plurality of nozzles 20 that eject polymer solutions 81 onto the support 7. Each of the plurality of spinning devices 10 may include the plurality of nozzles 20. For example, the first spinning device 11 may include a plurality of first nozzles 21 spaced apart upward from the support 7.

The plurality of nozzles 20 may be arranged in a direction orthogonal to a direction in which the support 7 is conveyed. For example, the plurality of nozzles 20 may be arranged in the width (W) direction of the support 7.

The spinning device 10 may include a spinning frame 30 that connects the plurality of nozzles 20 to each other. Each of the plurality of spinning devices 10 may include the spinning frame 30. For example, the first spinning device 11 may include a first spinning frame 31. Likewise, the second spinning device to the seventh spinning device 12, 13, 14, 15, 16, 17 may respectively include a second spinning frame to a seventh spinning frame (32, reference numerals omitted, 37).

The filter manufacturing apparatus 1 may include a connection frame 50 that connects the lift device 40 with the swing device 60. The connection frame 50 may be disposed between the swing device 60 and the lift device 40. The connection frame 50 may be connected to both the swing device 60 and the lift device 40.

The lift device 40 may be disposed between the connection frame 50 and the spinning frame 30. The lift device 40 may be connected to both the connection frame 50 and the spinning frame 30. The lift device 40 may reduce or increase a distance between the connection frame 50 and the spinning frame 30. For example, when the first lift device 40 raises the plurality of first nozzles 21, a distance between a first connection frame 51 and the first spinning frame 31 may be reduced.

The swing device 60 may be connected to the upper side of the connection frame 50. The lift device 40 may be connected to the lower side of the connection frame 50. In this case, even when the lift device 40 operates, the height of the connection frame 50 may remain unchanged, while the spinning frame 30 may be raised or lowered.

The spinning frame 30 may extend in the direction in which the plurality of nozzles 20 are arranged. Both the connection frame 50 and the spinning frame 30 may extend in the direction in which the plurality of nozzles 20 are arranged. For example, the first connection frame 51 and the first spinning frame 31 may extend in the width (W) direction of the support 7, which is the direction in which the plurality of first nozzles 21 are arranged.

The spinning frame 30 may connect the plurality of nozzles 20 to each other. The spinning frame 30 may extend in the direction in which the plurality of nozzles 20 are arranged and may be positioned on the upper sides of the nozzles 20 by connecting the nozzles 20 to each other. For example, the first spinning frame 31 may connect the plurality of first nozzles 21 to each other and be positioned on the upper sides of the first nozzles 21. That is, the plurality of nozzles 20 may be connected to each other by the spinning frame 30.

As the spinning frame 30 is connected to the plurality of nozzles 20, the plurality of nozzles 20 may move integrally with the spinning frame 30. For example, when the first spinning frame 31 is raised by the first lift device 41, the plurality of first nozzles 21 may be raised. Conversely, when the first spinning frame 31 is lowered by the first lift device 41, the plurality of first nozzles 21 may be lowered.

The first lift device 41 may include a first-side lift device 41a connected to a first side of the spinning frame 30 in the extending direction thereof, and a second-side lift device 41b connected to a second side of the spinning frame 30 in the extending direction thereof. For example, the first lift device 41 connected to the first spinning device 11 may include the first-side lift device 41a and the second-side lift device 41b. The first side of the spinning frame 30 in the extending direction thereof may be a first end of the spinning frame 30, and the second side of the spinning frame 30 in the extending direction thereof may be a second end of the spinning frame 30. For example, the first-side lift device 41a may be connected to the first end of the first spinning frame 31, and the second-side lift device 41b may be connected to the second end of the first spinning frame 31. In addition, the first-side lift device 41a may be connected to the first end of the first connection frame 51, and the second-side lift device 41b may be connected to the second end of the first connection frame 51.

Each of the plurality of spinning devices 10 may include the plurality of lift devices 40 corresponding to the first-side lift device 41a and the second-side lift device 41b, respectively. For example, each of the second spinning device 11 to the seventh spinning device 17 may include a pair of lift devices corresponding to the first-side lift device 41a and the second-side lift device 41b, respectively.

The lift device 40 and the swing device 60 may operate simultaneously. For example, while the swing device 60 moves the spinning device 10 in the horizontal direction, the lift device 40 may raise or lower the spinning device 10.

The lift device 40 and the swing device 60 may operate sequentially. For example, after the lift device 40 positions the spinning device 10 at a predetermined spinning height, the swing device 60 may move the spinning device 10 in the horizontal direction.

Referring to FIG. 5, the filter manufacturing apparatus 1 will be described.

The first-side lift device 41a and the second-side lift device 41b may operate independently of each other. As the first-side lift device 41a and the second-side lift device 41b operate independently, the spinning frame 30 may tilt. For example, when the height of the first spinning frame 31 raised by the second-side lift device 41b connected to a second side of the first spinning frame 31 is higher than the height of the first spinning frame 31 raised by the first-side lift device 41a connected to a first side of the first spinning frame 31, the first spinning frame 31 may tilt upward from the first side toward the second side.

As the first-side lift device 41a and the second-side lift device 41b operate independently, the first side of the spinning frame 30 connected to the first-side lift device 41a and the second side of the spinning frame 30 connected to the second-side lift device 41b may have different spinning heights. For example, when the first-side lift device 41a connected to the first side of the first spinning frame 31 and the second-side lift device 41b connected to the second side of the first spinning frame 31 independently raise or lower the first spinning frame 31, the spinning height (H1) of one first nozzle 21 connected to the first side of the first spinning frame 31 and the spinning height (H16) of one first nozzle 21 connected to the second side of the first spinning frame 31 may differ from each other.

Since the plurality of nozzles 20 are connected to the spinning frame 30, the plurality of nozzles 20 may move integrally with the spinning frame 30. For example, as the first spinning frame 31 becomes tilted, the plurality of first nozzles 21 connected to the first spinning frame 31 may be positioned at different spinning heights (H1 to H16), respectively.

Accordingly, the spinning device may have different spinning heights between the nozzles on the first side and those on the second side, allowing nanofibers 88 with different diameters to be deposited in the width (W) direction of the support 7.

Although the first spinning device 11 is illustrated as an example in FIG. 5, the same concept is not limited thereto and may also be applied to the second spinning device 12 to the seventh spinning device 17.

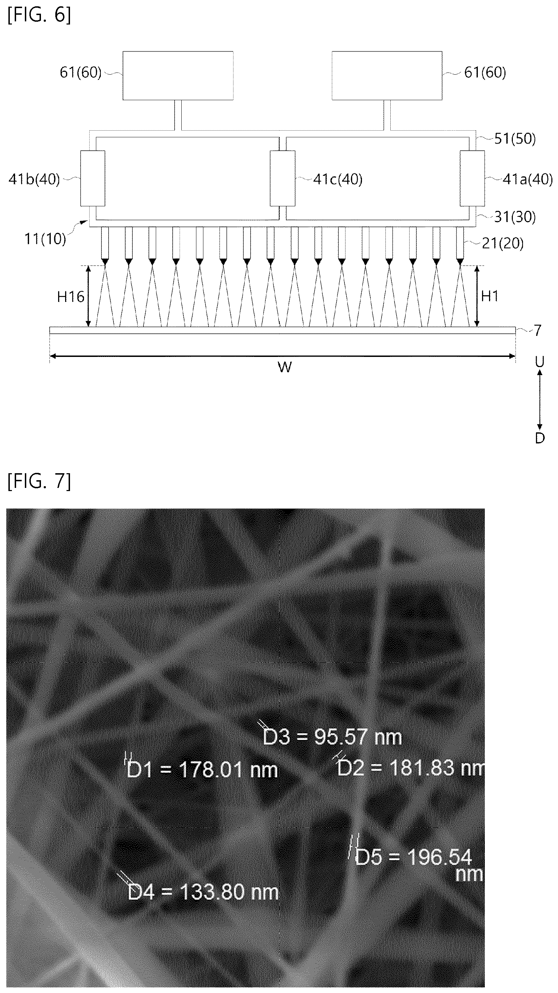

Referring to FIG. 6, the filter manufacturing apparatus 1 and a filter manufacturing method will be described.

According to another embodiment of the present disclosure, the filter manufacturing apparatus 1 may include an intermediate lift device 41c disposed between the first-side lift device 41a and the second-side lift device 41b. For example, the first spinning device 11 may include the intermediate lift device 41c disposed between the first-side lift device 41a and the second-side lift device 41b to raise or lower the plurality of first nozzles 21. Although FIG. 6 illustrates the first spinning device 11 as an example, the second spinning device 12 to the seventh spinning device 17 without being limited thereto may also include a lift device corresponding to the intermediate lift device 41c. In the following description of FIG. 6, the first spinning device 11 is described as an example, but the same description may be applied to the second spinning device 12 to the seventh spinning device 17 as well.

The intermediate lift device 41c may be disposed between the first spinning frame 31 and the first connection frame 51. The intermediate lift device 41c may connect the first spinning frame 31 with the first connection frame 51.

The intermediate lift device 41c may move integrally with the first-side lift device 41a and the second-side lift device 41b. For example, when the first-side lift device 41a and the second-side lift device 41b ascend or descend, the intermediate lift device 41c may also ascend or descend in correspondence with the first-side lift device 41a and the second-side lift device 41b.

As described above with reference to FIG. 5, just as the first-side lift device 41a and the second-side lift device 41b operate independently, the intermediate lift device 41c may operate independently of the first-side lift device 41a and/or the second-side lift device 41b. In this case, the first-side lift device 41a, the second-side lift device 41b, and the intermediate lift device 41c may be connected to the same first spinning frame 31 and the same first connection frame 51, and thus may operate independently to a limited extent within a considerable range.

With reference to FIG. 7, the filter manufacturing apparatus 1 and the filter manufacturing method will be described.

FIG. 7 is a microscopic image of a nanofiber layer obtained by an apparatus and a method for manufacturing a filter according to an embodiment of the present disclosure.

In this embodiment, a polymer solution was prepared by dissolving PES (Polyethersulfone) in a mixed solvent. The mixed solvent is a 1:1 weight ratio mixture of Dimethylformamide (DMF) and N-Methyl-2-pyrrolidone (NMP). The concentration of the PES solution was set to 19 wt% to prepare the polymer solution.

Next, during the process of spinning the polymer solution 81 through the spinning device 10, a solution discharge rate was set to 0.15 ml/hr, an applied voltage was 20 kV, and spinning height was varied within a range of 100 mm to 200 mm to manufacture the nanofiber fabric 9.

According to the microscopic image, a single layer of nanofibers may include nanofibers 88 with different diameters. For example, the single layer of nanofibers may include a nanofiber having a first diameter (D1), a nanofiber having a second diameter (D2), a nanofiber having a third diameter (D3), a nanofiber having a fourth diameter (D4), and a nanofiber having a fifth diameter (D5). The first diameter (D1) may be 178.01 nm. The second diameter (D2) may be 181.83 nm. The third diameter (D3) may be 95.57 nm. The fourth diameter (D4) may be 133.80 nm. The fifth diameter (D5) may be 196.54 nm.

Although only the diameters of five nanofibers 88 are shown in the image, the nanofiber layer 8 is not limited thereto and may be formed with more than five diameter groups by spinning at various spinning heights.

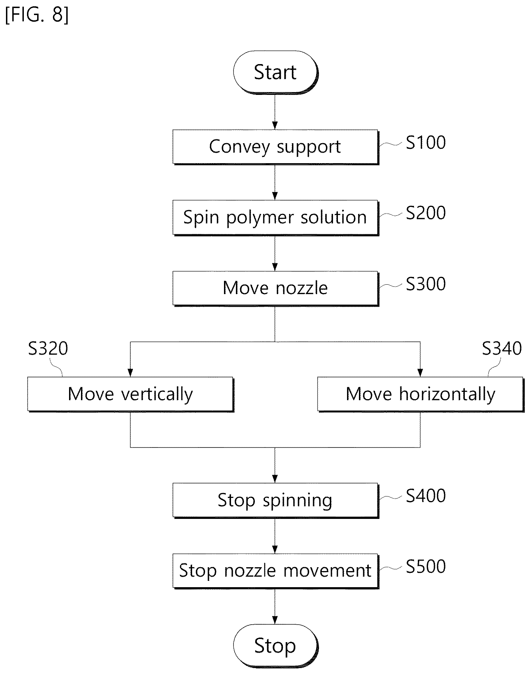

Referring to FIG. 8, the filter manufacturing method will be described.

The filter manufacturing method includes conveying a support in S100, spinning in S200, and moving a nozzle in S300.

The filter manufacturing method may include supplying the support (not shown). In the supplying of the support, the support 7 on which nanofibers 88 are deposited may be supplied. In the supplying of the support, the support 7 may be supplied in one direction.

The filter manufacturing method may include retrieving a fabric (not shown). The retrieving of a fabric may be performed simultaneously with the supplying of a support. Accordingly, the support 7 supplied in the supplying of a support may be retrieved in the retrieving of a fabric after the nanofiber layer 8 is stacked.

In the retrieving of a fabric, the nanofiber fabric 9 may be retrieved. The nanofiber fabric 9 may be a fabric in which the nanofiber layer 8 is stacked on the support 7. For example, the nanofiber fabric 9 may be a fabric in which a single layer of nanofibers including nanofibers 88 having different diameters is stacked on a support 7.

In the conveying of a support in S100, the support 7, on which nanofibers 88 are deposited, may be conveyed. The support 7 may be conveyed in one direction. The support 7 supplied in the supplying of a support may be conveyed in one direction in the conveying of a support in S100. The support 7 conveyed in the conveying of a support in S100 may be retrieved in the retrieving of a fabric after the nanofiber layer 8 is stacked. The support 7 conveyed in the conveying of a support in S100 may be retrieved in the retrieving of a fabric after the nanofiber layer 8 is stacked.

The conveying of a support in S100 may be performed simultaneously with the supplying of a support and the retrieving of a fabric.

In the spinning in S200, the polymer solution 81 discharged from the nozzle 20 may be spun onto the support 7. The spun polymer solution 81 may be nanofiberized as the solvent thereof evaporates in the air. The formed nanofibers 88 may be deposited onto the support 7.

In the moving of a nozzle in S300, the nozzle 20 may have its position changed. The nozzle 20 may reciprocate within a predetermined path range. The movement of the nozzle 20 may be patterned. The nozzle 20 may be moved in a vertical direction and/or a horizontal direction.

The moving of a nozzle in S300 may include moving in a horizontal direction in S340. In the moving in a horizontal direction in S340, the nozzle 20 may move in the horizontal direction. The horizontal direction may be a direction parallel to the surface of the support 7. That is, the nozzle 20, which reciprocates in the horizontal direction by the swing device 60, may be spaced apart from the surface of the support 7 and may move along an imaginary plane parallel to the surface of the support 7. For example, the distance between the nozzle 20 moving in the horizontal direction and the support 7 may be maintained constant.

The horizontal direction may include a plurality of axial directions parallel to the surface of the support 7. For example, the horizontal direction may include the width (W) direction and the longitudinal direction of the support 7. The longitudinal direction of the support 7 may be a direction parallel to the conveying direction (CD) of the support 7. That is, the nozzle 20 may move along a plurality of axes parallel to the surface of the support 7. As the nozzle 20 moves in the horizontal direction, a distance over and/or a range in which a solution is spun onto the support 7 may vary.

Accordingly, the spinning device may uniformly spin nanofibers onto the support.

The moving of a nozzle in S300 may include moving in a vertical direction in S320. In the moving in a vertical direction in S320, the nozzle 20 may move in the vertical direction. The vertical direction may be an up-and-down direction. When the nozzle 20 moves in the vertical direction, the distance between the support 7 and the nozzle 20 may change. That is, the spinning distance may vary. In the moving of a nozzle in S300, as the nozzle 20 moves in the up-and-down direction, the polymer solution 81 may be spun at various spinning heights, and nanofibers 88 with different diameters may be deposited on the support 7. That is, a nanofiber single layer composed of nanofibers having various diameters may be formed.

Accordingly, as a single nanofiber layer is obtained, interlayer separation in a nanofiber fabric may be reduced, and the durability of a filter may be improved.

In addition, a nanofiber layer including nanofibers of various diameters may be obtained, thereby reducing the pressure loss of a filter made of a nanofiber fabric.

In the moving of a nozzle in S300, a time during which the nozzle 20 spins the polymer solution 81 at a first position may be shorter than a time during which the nozzle 20 spins the polymer solution 81 at a second position located above the first position.

Accordingly, the amount of nanofibers having small diameters, which are spun from a higher position, may be greater than the amount of nanofibers having large diameters, which are spun from a lower position, thereby improving the performance of a nanofiber filter.

In the moving of a nozzle in S300, the horizontal movement and vertical movement of the nozzle 20 may be performed simultaneously. In this case, the nozzle 20 may move in a diagonal direction.

In the spinning S200, a speed at which the nozzle 20 moves in the horizontal direction may be faster than a speed at which the nozzle 20 moves in the vertical direction. The reciprocating distance of the nozzle 20 in the horizontal direction may be greater than the reciprocating distance of the nozzle 20 in the vertical direction.

Accordingly, nanofibers with similar diameters may be evenly dispersed in the horizontal direction, and nanofibers with various diameters may be sequentially deposited in the vertical direction.

Additionally, nanofibers with improved uniformity may be produced.

Additionally, a nanofiber fabric with reduced pressure loss may be obtained.

In the spinning in which the polymer solution 81 is spun onto the support 7, the vertical movement and horizontal movement of the nozzle 20 may be performed separately. For example, the nozzle 20 may move vertically to be positioned at a plurality of height points, and at each of the plurality of height points, the nozzle 20 may reciprocate in the horizontal direction.

Accordingly, nanofibers having the same diameters may be evenly dispersed in the horizontal direction, and nanofibers having different diameters may be sequentially deposited in the vertical direction.

Additionally, nanofibers with improved uniformity may be produced.

Additionally, a nanofiber fabric with reduced pressure loss may be obtained.

The moving of the nozzle in S300 and the spinning in S200 may be performed simultaneously. That is, the nozzle 20 may continuously move while the polymer solution 81 is being spun. At the beginning of the process, the moving of a nozzle in S300 may start before the spinning S200. That is, the polymer solution 81 may begin to be ejected from the moving nozzle 20. Conversely, at the beginning of the process, the spinning in S200 may start before the moving of a nozzle in S300. That is, after the polymer solution 81 may begin to be ejected from the nozzle 20, the nozzle 20 may start to move.

The moving of the nozzle in S300 and the spinning in S200 may be performed separately. That is, the nozzle 20, which has performed the spinning in S200 at the first position, may move from the first spinning position to the second spinning position, and then the spinning S200 may be started. In this case, the spinning in S200 may not be performed while the nozzle 20 is moving from the first spinning position to the second spinning position.

Alternatively, after the spinning in 200 stops, the moving of a nozzle in S300 may be performed, and then the spinning in S200 may be resumed. In this case, in the moving of a nozzle in S300, the polymer solution 81 may not be spun from the nozzle 20.

The filter manufacturing method may include stopping spinning in S400. When the production of the nanofiber fabric 9 is completed, the spinning of the polymer solution 81 may be stopped.

The filter manufacturing method may include stopping nozzle movement in S500. When the production of the nanofiber fabric 9 is completed, the movement of the nozzle 20 may be stopped. The stopping of nozzle movement in S500 may be performed after the stopping of spinning in S400. That is, when the production of the nanofiber fabric 9 is completed, the ejection of the polymer solution 81 from the moving nozzle 20 may be stopped, and then the movement of the nozzle 20 may be stopped. However, this is not limited thereto, and the stopping of nozzle movement in S500 and the stopping of spinning in S400 may be performed simultaneously. Alternatively, after the stopping of nozzle movement in S500 is performed first, the stopping of spinning in S400 may be performed.

Referring to FIGS. 1 to 8, according to an aspect of the present disclosure, the filter manufacturing apparatus may include: the support conveying device configured to convey the support, on which nanofibers are deposited, in one direction; the spinning device spaced apart from the support and configured to eject a solution onto the support; and the lift device connected to the spinning device and configured to change a distance between the spinning device and the support conveying device.

According to another aspect of the present disclosure, the spinning device may be located above the support, and the lift device may raise or lower the spinning device.

According to another aspect of the present disclosure, the spinning device may include: the plurality of nozzles spaced apart upward from the support and arranged in the direction orthogonal to the conveying direction of the support so as to eject a solution onto the support; and the spinning frame that extends in the direction in which the plurality of nozzles are arranged, with the spinning frame connecting the plurality of nozzles to each other.

According to another aspect of the present disclosure, the lift device may include: the first-side lift device connected to the first side of each of the spinning frames in the direction in which the spinning frame extends, and the second-side lift device connected to the second side of the spinning frame in the direction in which the spinning frame extends.

According to another aspect of the present disclosure, the first-side lift device and the second-side lift device may operate independently of each other.

According to another aspect of the present disclosure, the spinning device may include the plurality of spinning devices arranged in the conveying direction of the support, wherein the plurality of spinning devices may be raised or lowered independently of each other.

According to another aspect of the present disclosure, the filter manufacturing apparatus may further include: the swing device connected to the spinning device and configured to reciprocate the spinning device in the horizontal direction.

According to another aspect of the present disclosure, the lift device may be disposed between the spinning device and the swing device.

According to another aspect of the present disclosure, the filter manufacturing apparatus may further include: the power unit configured to charge the spinning device, wherein the power unit varies a voltage applied to the spinning device within a predetermined range.

Referring to FIGS. 1 to 8, according to an aspect of the present disclosure, the filter manufacturing method may include: conveying the support on which nanofibers are deposited; spinning the solution from the nozzle onto the support; and moving the nozzle so that a position of the nozzle is changed.

According to another aspect of the present disclosure, in the moving of the nozzle, the nozzle may move in the vertical direction within a predetermined height range.

According to another aspect of the present disclosure, in the moving of the nozzle, a time during which the nozzle spins the solution at the first position may be shorter than a time during which the nozzle spins the solution at the second position located above the first position.

According to another aspect of the present disclosure, in the moving of the nozzle, the nozzle may reciprocate in a horizontal direction.

According to another aspect of the present disclosure, in the moving of the nozzle, the nozzle may move in the vertical direction while reciprocating in the horizontal direction.

According to another aspect of the present disclosure, in the moving of the nozzle, a speed at which the nozzle moves in the horizontal direction may be faster than a speed at which the nozzle moves in the vertical direction.

According to another aspect of the present disclosure, in the moving of the nozzle, the vertical movement and the horizontal movement of the nozzle may be performed separately, wherein the nozzle may move vertically to be positioned at a plurality of height points, and at each of the plurality of height points, the nozzle may reciprocate in the horizontal direction.

## Claims

1. A filter manufacturing apparatus comprising:
a support conveying device configured to convey a support, on which nanofibers are deposited, in one direction;
a spinning device spaced apart from the support and configured to eject a solution onto the support; and
a lift device connected to the spinning device and configured to change a distance between the spinning device and the support conveying device.

2. The filter manufacturing apparatus of claim 1, wherein the spinning device is located above the support, and the lift device raises or lowers the spinning device.

3. The filter manufacturing apparatus of claim 1, wherein the spinning device comprises:
a plurality of nozzles spaced apart upward from the support and arranged in a direction orthogonal to a conveying direction of the support so as to eject a solution onto the support; and
a spinning frame that extends in the direction in which the plurality of nozzles are arranged, with the spinning frame connecting the plurality of nozzles to each other.

4. The filter manufacturing apparatus of claim 3, wherein the lift device comprises:
a first-side lift device connected to a first side of each of the spinning frames in a direction in which the spinning frame extends, and
a second-side lift device connected to a second side of the spinning frame in the direction in which the spinning frame extends.

5. The filter manufacturing apparatus of claim 4, wherein the first-side lift device and the second-side lift device operate independently of each other.

6. The filter manufacturing apparatus of claim 3, wherein the spinning device comprises a plurality of spinning devices arranged in the conveying direction of the support,
wherein the plurality of spinning devices are raised or lowered independently of each other.

7. The filter manufacturing apparatus of claim 2, further comprising:
a swing device connected to the spinning device and configured to reciprocate the spinning device in a horizontal direction.

8. The filter manufacturing apparatus of claim 7, wherein the lift device is disposed between the spinning device and the swing device.

9. The filter manufacturing apparatus of claim 1, further comprising:
a power unit configured to charge the spinning device,
wherein the power unit varies a voltage applied to the spinning device within a predetermined range.

10. A filter manufacturing method comprising:
conveying a support on which nanofibers are deposited;
spinning a solution from a nozzle onto the support; and
moving the nozzle so that a position of the nozzle is changed.

11. The filter manufacturing method of claim 10, wherein in the moving of the nozzle,
the nozzle moves in a vertical direction within a predetermined height range.

12. The filter manufacturing method of claim 11, wherein in the moving of the nozzle,
a time during which the nozzle spins the solution at a first position is shorter than a time during which the nozzle spins the solution at a second position located above the first position.

13. The filter manufacturing method of claim 11, wherein in the moving of the nozzle,
the nozzle reciprocates in a horizontal direction.

14. The filter manufacturing method of claim 13, wherein in the moving of the nozzle,
the nozzle moves in the vertical direction while reciprocating in the horizontal direction.

15. The filter manufacturing method of claim 14, wherein in the moving of the nozzle,
a speed at which the nozzle moves in the horizontal direction is faster than a speed at which the nozzle moves in the vertical direction.

16. The filter manufacturing method of claim 13, wherein in the moving of the nozzle,
the vertical movement and the horizontal movement of the nozzle are performed separately,
wherein the nozzle moves vertically to be positioned at a plurality of height points, and at each of the plurality of height points, the nozzle reciprocates in the horizontal direction.
